Europäisches Patentamt

European Patent Office

Office européen des brevets

(19)

(11) Veröffentlichungsnummer: **0 013 035**
**B1**

(12) # EUROPÄISCHE PATENTSCHRIFT

(45) Veröffentlichungstag der Patentschrift:
19.05.82

(21) Anmeldenummer: 79200524.1

(22) Anmeldetag: 19.09.79

(51) Int. Cl.³: **C 02 F 3/04**

(54) **Vorrichtung zur biologischen Reinigung von Abwasser.**

(30) Priorität: 29.12.78 DE 2856615

(43) Veröffentlichungstag der Anmeldung:
09.07.80 (Patentblatt 80/14)

(45) Bekanntmachung des Hinweises auf die Patenterteilung: 19.05.82 Patentblatt 82/20

(84) Benannte Vertragsstaaten:
AT BE CH DE FR IT NL

(56) Entgegenhaltungen:
DE - A - 2 524 678
DE - C - 866 929
GB - A - 576 329

Husmann « Die Praxis der Abwasserreinigung »
3. Auflage, 1969, S. 23

(73) Patentinhaber: Uhde GmbH
Deggingstrasse 10 - 12
D-4600 Dortmund 1 (DE)

(72) Erfinder: Schöning, Horst
Im Lerchenfeld 1a
D-5804 Herdecke (DE)
Erfinder: Thieme, Horst
Düsseldorfer Strasse 17
D-4600 Dortmund (DE)

(74) Vertreter: Patentanwälte Meinke und Dabringhaus
Westenhellweg 67
D-4600 Dortmund 1 (DE)

Imprimerie Jouve, 18, rue St-Denis, 75001 Paris, France

EP 0 013 035 B1

## Vorrichtung zur biologischen Reinigung von Abwasser

Die Erfindung betrifft eine Vorrichtung zur biologischen Reinigung von Abwasser mit innerhalb eines geschlossenen, im wesentlichen zylindrischen Behälters angeordneten, mit Luft begasten Tropfkörpern, wobei ein vertikales, zentral angeordnetes Rohr zur Lagerung von oberhalb der Tropfkörper angeordneten, ggfs. drehbaren Abwasserverteilern und ggf. zur Zufuhr des Abwassers zu diesen dient und wobei die von unten zugeführte Begasungsluft nach dem Passieren der Tropfkörper nach oben abgesaugt wird.

Bei bekannten Vorrichtungen dieser Art (DE-A 25 24 678) erfolgt die Abluftführung über Dach mit großkalibrigen, außenliegenden Rohren, an die ein entsprechend dimensioniertes Abluftgebläse angeschlossen ist. Das Eigengewicht der Abluftleitung sowie des Abluftgebläses muß dabei von der Dachkonstruktion des Behälters aufgenommen werden, sofern man nicht besondere Tragkonstruktionen oberhalb des Behälters vorsieht. Hinzu kommt, daß bei Anordnung des Gebläses in der durch das Dach des Behälters austretenden Abluftleitung mit einem hohen Schalldruckpegel gerechnet werden muß, was aus Gründen des Umweltschutzes in manchen Fällen zusätzlich von Nachteil ist.

Eine ähnliche Art der Abluftführung über Dach ist auch aus Husmann « Die Praxis der Abwasserreinigung » 3. Auflage, 1969, S. 23 bekannt, für die grundsätzlich die oben beschriebenen Nachteile ebenfalls gelten. In der GB-A 576 329, dort insbesondere zu Fig. 7 und 8, ist ein Umluftsystem beschrieben, mit dem die Luftführung gegen die natürliche Thermik geführt werden kann. Diese Umluftführung hat allerdings den Nachteil, daß es nicht nur zu ungleichmäßiger Luftverteilung im Tropfkörper kommen kann, sondern auch zu unzulässigen Überdrücken, die ein druckfestes Containment mit sich brächte, so daß derartige Systeme in der Praxis nicht angewendet werden.

Aufgabe der Erfindung ist die Schaffung einer Lösung, mittels welcher einerseits der vorrichtungsmäßige Aufwand vereinfacht und andererseits die Umweltbelastung verringert wird.

Bei einer Vorrichtung der eingangs bezeichneten Art wird diese Aufgabe gemäß der Erfindung dadurch gelöst, daß das zentral angeordnete Rohr auch zur Absaugung der die Tropfkörper begasenden Luft ausgebildet ist.

Diese Ausbildung benötigt praktisch keinerlei zusätzlichen Aufwand, da das zentral angeordnete Rohr ohnehin vorhanden ist und außerdem zur Gewährleistung einer ausreichend sicheren Lagerung der drehbaren Abwasserverteiler einen solch geräumigen Querschnitt aufweist, daß das zur Absaugung der Abluft benötigte Gebläse wegen nur geringer Druckverluste im zentralen Absaugrohr entsprechend gering dimensioniert werden kann. Hinzu kommt, daß aufgrund der erfindungsgemäßen Ausbildung das Abluftgebläse ohne weiteren Aufwand in Bodennähe angeordnet werden kann, so daß der Beschallungsbereich entsprechend gering ist und ggf. auch noch leicht eine Einkapselung möglich ist.

Letzteres ist dann besonders einfach, wenn das untere Ende des zentral angeordneten Rohres mit einem zu einem Abluftgebläse führenden Abluftkanal verbunden ist.

Da aufgrund der erfindungsgemäßen Ausgestaltung das Dach des Behälters von zusätzlichen Belastungen vollkommen freibleiben kann, empfiehlt es sich schließlich, dieses, wie an sich bekannt, aus einer leichten, nicht begehbaren Kuppel in Leichtbauweise, z.B. aus glasfaserverstärktem Kunststoff (GFK), zu bilden, was den für die Vorrichtung erforderlichen Gesamtaufwand weiter verringert.

Die Erfindung ist nachstehend anhand der Zeichnung beispielsweise näher erläutert. Diese zeigt in

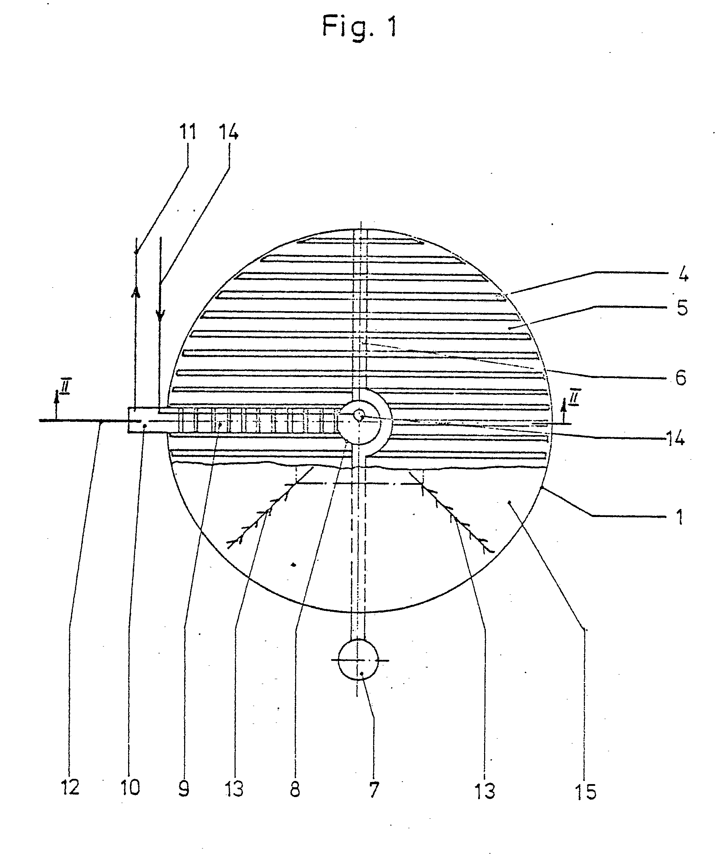

Figur 1 eine teilweise weggebrochen wiedergegebene Draufsicht auf eine Vorrichtung gemäß der Erfindung und in

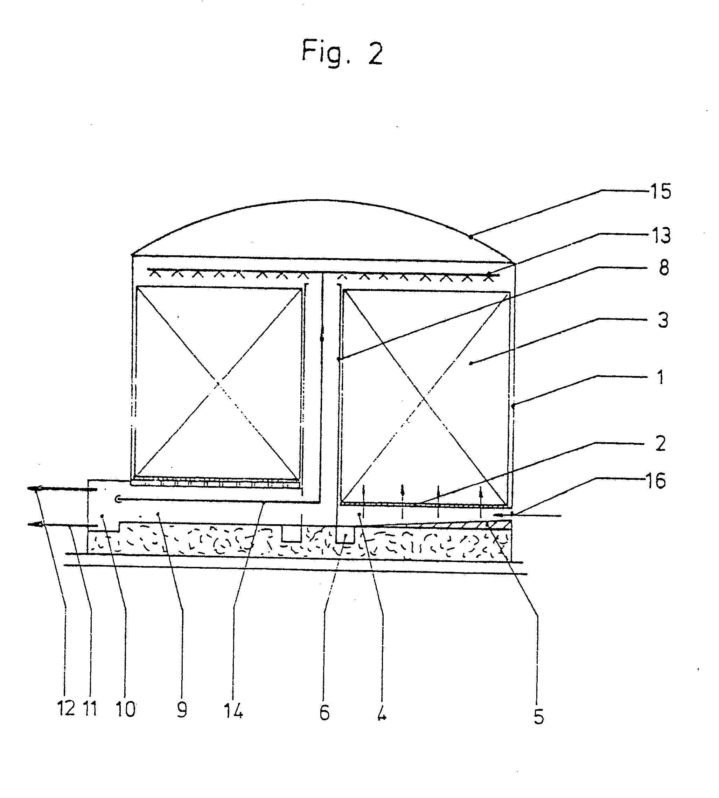

Figur 2 einen Vertikalschnitt längs der Linie II-II der Fig. 1.

In einem zylindrischen Behälter 1 ist auf einem waagerechten, gas- und flüssigkeitsdurchlässigen Tragrost 2 eine Vielzahl von Tropfkörpern 3 angeordnet, die beispielsweise in Kunststoffbauweise ausgebildet und mit einem sogenannten biologischen Rasen versehen sein können.

Unterhalb des waagerechten Tragrostes 2 sind Betonrippen 4 angeordnet, zwischen denen geneigte Ablaufrinnen 5 gebildet sind, die in eine Sammelrinne 6 münden, welche zu einem Ablaufschacht 7 führt.

Zentrisch ist im Behälter 1 ein ggf. aus einzelnen Schachtringen gebildetes Betonrohr 8 angeordnet, das an seinem unteren Ende mit einem waagerechten Abluftkanal 9 verbunden ist, an dessen Ende ein Entwässerungsbecken 10 mit daran anschließender Entwässerungsleitung 11 zur Abführung mitgerissenen Abwassers vorgesehen ist. Eine daran anschließende Abluftleitung 12 führt zu einem nicht dargestellten Abluftgebläse.

Am oberen Ende des zentrischen Rohres 8 ist ein Abwasserverteiler in Form eines Drehsprengers 13 drehbar gelagert, wobei eine an den Drehsprenger angeschlossene Abwasserzuführungsleitung 14 sich durch das zentrische Rohr 8 und den Abluftkanal 9 erstreckt. Dicht oberhalb des Rehsprengers 13 wird der Behälter 1 von einer GFK-Kuppel 15 abgedeckt. Die Begasungsluft gelangt durch in der Behälterwandung unterhalb des waagerechten Tragrostes 2 angeordnete Lüftungsöffnungen 16 zu den Tropfkörpern, wobei zweckmäßig jeweils eine Lüftungsöffnung an den beiden Enden jeder zwischen zwei Betonrippen 4 gebildeten Rinne 5 in der Behälterwandung angeordnet ist.

Die Arbeitsweise der vorbeschriebenen Vorrichtung ist wie folgt : Ggf. schon vorbehandeltes Abwasser wird mittels einer nicht dargestellten Abwasserpumpe über die Leitung 14 dem Drehsprenger 13 zugeführt und von diesem gleichmäßig auf die Tropfkörper 3 verteilt, wobei das von den Tropfkörpern ablaufende Wasser über die Rinnen 5 und die Sammelrinne 6 in den Ablaufschacht 7 gelangt. Durch die Lüftungsöffnungen 16 eintretende Frischluft gelangt durch den Tragrost 2 gleichmäßig verteilt zu den Tropfkörpern 3, durchströmt diese und wird mittels des in der Abluftleitung 12 angeordneten, nicht dargestellten Gebläses über das zentrische Rohr 8 und den Abluftkanal 9 abgezogen und ggf., d.h. bei erfolgter Geruchsaufnahme, weiterbehandelt. Bei diesem Vorgang findet durch Anwesenheit des Sauerstoffs der Luft, des biologischen Rasens auf den Tropfkörpern und des abbaufähigen Materiales in den Abwässern selbst ein teilweiser biologischer Abbau der organischen Abwasserinhaltsstoffe statt.

Natürlich kann das die Tropfkörper passiert habende Abwasser einer weiteren Nachbehandlung unterzogen werden, indem dieses beispielsweise nachfolgend einem sogenannten Belebungsbecken zugeführt wird, in dem eine Bläschenbegasung mittels Druckluft erfolgt. Dabei kann das Belebungsbecken als gesonderte Einrichtung gemäß DE-C 24 39 013 nachgeschaltet sein, kann aber auch mit der vorbeschriebenen Vorrichtung unmittelbar kombiniert werden, in dem das Belebungsbecken gemäß DE-A 25 24 678 unterhalb der vorgeschilderten Vorrichtung angeordnet wird, derart, daß die das Tropfkörpersystem passiert habenden Abwässer unmittelbar in das Belebungsbecken gelangen und dort mit Frischluft begast werden, die gemäß der Lehre der vorgenannten DE-A 25 24 678 anschließend auch das Tropfkörpersystem beaufschlagen kann. Im letzteren Fall braucht das zentrische Rohr dann nur auch durch das Belebungsbecken hindurchgeführt, so wie dies DE-A 25 24 678 bereits zeigt, und an das untere Ende desselben der vorbeschriebene Abluftkanal angeschlossen zu werden.

Auch weitere Abwandlungen bzw. Abänderungen des vorbeschriebenen Ausführungsbeispiels sind möglich, ohne den Grundgedanken der Erfindung zu verlassen. So könnte auch mit stationären Abwasserverteilern anstelle eines Drehverteilers gearbeitet werden und natürlich könnte die Abwasserzufuhr zu den Verteilern auch außerhalb des zentral angeordneten Rohres erfolgen.

## Ansprüche

1. Vorrichtung zur biologischen Reinigung von Abwasser mit innerhalb eines geschlossenen, im wesentlichen zylindrischen Behälters angeordneten, mit Luft begasten Tropfkörpern, wobei ein vertikales, zentral angeordnetes Rohr zur Lagerung von oberhalb der Tropfkörper angeordneten, ggf. drehbaren Abwasserverteilern und ggf. zur Zufuhr des Abwassers zu diesen dient und die von unten zugeführte Begasungsluft nach dem Passieren der Tropfkörper von oben abgesaugt wird, dadurch gekennzeichnet, daß das zentral angeordnete Rohr (8) auch zur Absaugung der die Tropfkörper (3) begasenden Luft ausgebildet ist.

2. Vorrichtung nach Anspruch 1, dadurch gekennzeichnet, daß das untere Ende des zentral angeordneten Rohres (8) mit einem zu einem Abluftgebläse führenden Abluftkanal (9) verbunden ist.

3. Vorrichtung nach Anspruch 1 oder 2, dadurch gekennzeichnet, daß das Dach des Behälters (1) von einer an sich bekannten Kuppel (15) in Leichtbauweise gebildet ist.

## Claims

1. Apparatus for the biological purification of waste water comprising percolating filters which are arranged within a closed, substantially cylindrical container and which are supplied with air, wherein a vertical, centrally arranged pipe is provided for mounting waste water distributors which are arranged above the percolating filters and which are possibly rotatable, and optionally for supplying the waste water to the waste water distributors, and the supply air which is supplied from below is sucked off from the top after passing through the percolating filters, characterised in that the centrally arranged pipe (8) is also arranged to suck away the air supplying the percolating filters (3).

2. Apparatus according to claim 1 characterised in that the lower end of the centrally arranged pipe (8) is connected to an air discharge passage (9) leading to an air discharge blower.

3. Apparatus according to claim 1 or claim 2 characterised in that the roof of the container (1) is formed by a per se known dome member (15) of lightweight construction.

## Revendications

1. Dispositif destiné à l'épuration biologique d'eaux usées et comprenant des lits percolateurs aérés disposés à l'intérieur d'une cuve fermée sensiblement cylindrique, un tuyau vertical placé centralement étant destiné à supporter des distributeurs d'eaux usées, éventuellement rotatifs, montés au-dessus des lits percolateurs et, le cas échéant, à amener les eaux usées à ces distributeurs et l'air servant à l'aération, amené d'en bas, étant évacué d'en haut par aspiration après avoir traversé les lits percolateurs, caractérisé en ce que le tuyau (8) disposé centralement est réalisé en même temps de façon à aspirer l'air utilisé pour aérer les lits percolateurs (3).

2. Dispositif suivant la revendication 1, caractérisé en ce que l'extrémité inférieure du tuyau (8) disposé centralement communique avec un canal d'évacuation d'air (9) conduisant à un ventilateur aspirant.

3. Dispositif suivant la revendication 1 ou 2, caractérisé en ce que la couverture de la cuve (1) est constituée d'un dôme (15) connu en soi et construit de façon légère.

# Fig. 1

Fig. 2